# EUROPEAN PATENT APPLICATION

(11) **EP 1 696 673 A1**
(43) Date of publication of application: **30.08.2006**
(21) Application number: 04255275.2
(22) Date of filing: 01.09.2004
(51) Int. Cl.: H04N 7/26

(54) **Intra-frame prediction for high-pass temporal-filtered frames in wavelet video coding**

(71) Applicant: Mitsubishi Electric Information Technology Centre Europe B.V., Guildford, Surrey GU2 7YD (GB); MITSUBISHI DENKI KABUSHIKI KAISHA, Chiyoda-ku Tokyo 100-8310 (JP)
(72) Inventor: Cieplinski, Leszek, Merrow Guildford Surrey GU1 2UF (GB); Ghanbari, Soroush, Guildford Surrey GU1 1HS (GB)
(74) Representative: Whitlock, Holly Elizabeth Ann

(57) **Abstract**

A method of encoding a sequence of frames using 3-D decomposition, the method comprising dividing the frames into blocks and coding the blocks, wherein coding a current block comprises evaluating at least one neighbouring block in the same frame and making a determination about whether to code data in the region of the current block corresponding to a neighbouring block depending on the evaluation of said at least one neighbouring block. The method optionally comprises a subsampling step.

## Description

The invention relates to encoding and decoding of a sequence of images (video sequence) using 3-D (t+2D) wavelet coding. More specifically, an improved method of performing intra-frame prediction for parts (blocks) of a high-pass frame generated during the temporal decomposition is proposed.

The papers "Three-Dimensional Subband Coding with Motion Compensation" by Jens-Rainer Ohm and "Motion-Compensated 3-D Subband Coding of Video" by Choi and Woods are background references describing 3-D subband coding. Briefly, a sequence of images, such as a Group of Pictures (GOP), in a video sequence, are decomposed into spatiotemporal subbands by motion compensated (MC) temporal analysis followed by a spatial wavelet transform. In alternative approaches, the temporal and spatial analysis steps may be reversed. The resulting subband coefficients are further encoded for transmission.

A well known problem in motion-compensated wavelet video coding occurs when temporal filtering cannot be performed due to either complete failure or unsatisfactory quality of motion estimation for a particular region/block of a frame. In the prior art, this problem was solved by not applying temporal filtering when generating low-pass frames and performing motion-compensated prediction for the generation of high-pass frames. A problem with the latter is that the resulting block in the high-pass frame tends to have relatively high energy (high value coefficients), which has negative effect on further compression steps. In our previous patent application, EP Appl. No. 03255624.3, we introduced the idea of using intra-frame prediction for improved generation for the problem blocks of high-pass frames. In that invention, the blocks are predicted not from the temporally neighbouring frame but from the spatial neighbourhood of the current frame. Different prediction modes can be employed, several of which are described in the above-mentioned patent application.

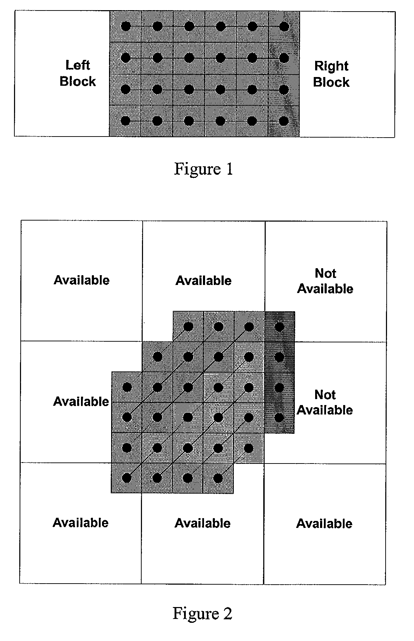

Most video coding systems that use intra-frame prediction (e.g. MPEG-4 part 10/H.264) restrict the prediction to use only the previously processed blocks in the block scanning order. This restriction is not always necessary in case of wavelet-based coding. This is discussed in the above-mentioned application and further explored in the paper entitled "Directional Spatial 1-blocks for MC-EZBC Video Coder" by Wu and Woods (ICASSP 2004, May 2004, previously presented to MPEG in December 2003). A novel element in this paper is the use of interpolation as well as prediction for formation of high-pass frame blocks. An example of such interpolation is shown in Figure 1 of the accompanying drawings, where interpolation between the block on the left and the block on the right of the current block is employed.

For prediction/interpolation directions other than horizontal and vertical, the situation gets more complicated and the number of blocks that need to be used may be significantly higher. This is illustrated in Figure 2 of the accompanying drawings which also shows that in this case a part of the block (lighter grey) is predicted rather than interpolated due to their non-availability.

As discussed in the Wu and Woods paper, the use of non-causal directions (for a given block, causal directions correspond to preceding blocks in the scanning order and non-causal directions correspond to later blocks in the scanning order) in prediction and interpolation requires careful consideration of the availability of the blocks to avoid a situation where e.g. two blocks are predicted from each other and to ensure consistency between encoder and decoder. The solution proposed in the Woods and Wu paper is to employ a two-sweep procedure:
1. In the first sweep only the DEFAULT mode blocks (i.e. blocks for which motion estimation is considered to have been successful) are use as predictors. The MSE resulting from intra-frame prediction is compared to that for motion compensation and the blocks for which intra-frame prediction results in lower MSE are marked as intra-predicted.
2. In the second sweep, all the blocks that were not marked as intra predicted in the first step are used for predictors. This means that more neighbours can be used for prediction/interpolation of the intra-predicted blocks, which tends to decrease the MSE of the high-pass block.

Several improvements to the intra-frame interpolation approach were described in another of our previous patent applications, EP 04254021.1, where a method of limiting the impact of error propagation, called block restriction, was introduced. When this restriction is in place, the intra-frame prediction can only be performed from blocks/pixels that were not themselves intra-frame predicted. A new three-step mode selection algorithm was also proposed there, as well as a number of techniques for reducing visual artefacts at low bitrates.

Another approach to limiting the error propagation impact was proposed in the MPEG contribution "Responses of CE1c: Intra-prediction" by Woo-Jin Han and Sangchang Cha presented in July 2004. They propose explicit coding of a reduced-resolution version of the block (4x4 version of a 16x16 block and 2x2 version of the corresponding subsampled chrominance block in their implementation) using Hadamard transform and interpolation of the remaining coefficients between the explicitly coded pixels. The explicit coding only uses prediction when it is possible to perform it without error at the decoder, ie using either a fixed value or the decoded values of pixels from neighbouring blocks if they are encoded using the same technique. They report an overall improvement in quality when this method is combined with rate-distortion optimisation and deblocking of the intra-predicted block boundaries.

The techniques described above have a number of problems. One of them is the propagation of quantisation errors when intra-frame prediction is repeatedly performed using intra-predicted blocks. On the other hand, when the values of pixels in the block are explicitly coded, they increase the number of bits that need to be sent thus impairing compression performance.

To achieve better balance between error propagation and bitrate overhead, we propose an adaptive scheme that sends additional bits only when appropriate, for example, when prediction or interpolation would lead to significant error propagation.

Aspects of the invention are set out in the accompanying claims.

In a first aspect of the invention, a block is subsampled and subsampled values are explicitly coded and used for reconstruction of the block. Some of the subsampled values, in particular, lines of outer boundary values, are sent only if the corresponding neighbouring block is not available. Otherwise, the values from the corresponding neighbouring block are copied and used in the reconstruction.

A second aspect of the invention is based on the prior art subsampling technique, but uses different subsampling positions so reconstructions can be done without using other blocks.

In a third aspect of the invention, coding is based on prediction/interpolation with respect to other blocks in the same frame. If a neighbouring block is not available for prediction/interpolation, pixel values in the current block in a location corresponding to the neighbouring block (eg a line adjacent to said neighbouring block) are explicitly coded.

Embodiments of the invention will be described with reference to the accompanying drawings of which:
Fig. 1 is a diagram illustrating intra-frame interpolation in the horizontal direction;
Fig. 2 is a diagram illustrating intra-frame interpolation in a diagonal direction;
Fig. 3 is a diagram representing a 16x16 pixel block;
Fig. 4 is a diagram illustrating a subsampling lattice for a 16x16 block;
Fig. 5 is a diagram illustrating a subsampling lattice for a 8x8 block;
Fig. 6 is a block diagram of an apparatus according to an embodiment of the invention.

The techniques of the present invention are based on the prior art techniques such as described in the prior art documents mentioned above, which are incorporated herein by reference.

In the first implementation of the idea outlined above, we start from the interpolation approach with explicit coding of the subsampled block described by Han & Cha.

In Han & Cha, a macroblock is divided into sixteen subblocks for the luminance component and four subblocks for the chrominance component. Each subblock is subsampled by using one DC or pixel value for each subblock. More specifically, the pixel value for the left-topmost position in the subblock is selected. This results in a 4x4 representation of a luminance macroblock and a 2x2 representation of a chrominance macroblock.

A subblock is reconstructed using the representative pixel value for the subblock, and the representative pixels for three neighbouring subblocks (to the right, below, and to the right and below), and interpolation (see Han & Cha for further details).

The subsampled 4x4 and 2x2 blocks are quantised using different modes of prediction/interpolation with respect to a neighbouring block or blocks or a fixed value of 128 based on availability of neighbouring blocks (if a neighbouring block is encoded using inter-prediction it is not available; if a neighbouring block is encoded using intra-prediction it is available).

After prediction/interpolation, the resulting values are transformed using a Hadamard transform and then quantised.

We modify the block modes of Han & Cha so that different sets of pixels in the current block are sent depending on the status of the neighbouring blocks. For example, if none of the surrounding blocks are available (see below) then a 4x4 sub-sampled block as in the Han & Cha proposal is sent. If only some of the surrounding blocks are available, the pixels on the boundary corresponding to non-available blocks are sent, but not for other boundaries in the Han & Cha sub-sampled block. If all the surrounding blocks are available, prediction/interpolation is carried out using surrounding blocks, and no additional bits (ie for boundaries in the Han & Cha subsampled blocks) are sent.

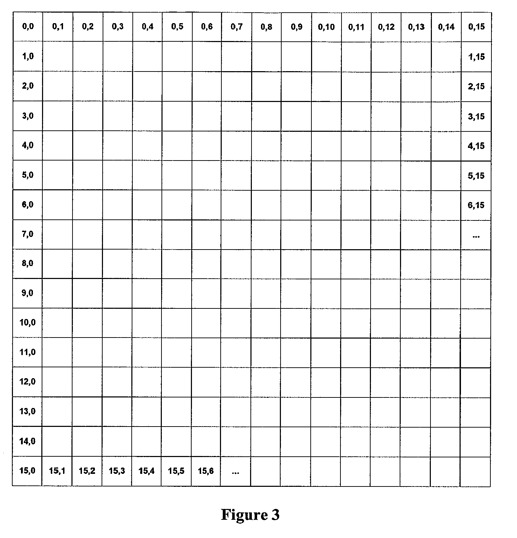

Before proceeding with a specific example, we clarify the notation that will be subsequently used with reference to Figure 3. In the original Han & Cha proposal, the following pixels (referring to location in a block of pixels) are selected as the representative pixels for subsampling, and transmitted, after an appropriate encoding: (0,0), (0,4), (0,8), (0,12), (4,0), (4,4), (4,8), (4,12), (4,0), (8,4), (8,8), (8,12), (12,0), (12,4), (12,8), (12,12).

As an alternative, we propose to use pixels at positions (0,0), (0,5), (0,10), (0,15), (5,0), (5,5), (5,10), (5,15), (5,0), (10,5), (10,10), (10,15), (15,0), (15,5), (15,10), (15,15) in a 16x16 block as representative pixels in subsampling. This gives better coverage of the block and is preferable for reconstruction, because the interpolation for reconstruction of a block can be carried out using only pixels of the original block and does not require pixels from adjacent blocks as in the prior art, which may not always be available. Similarly, for an 8x8 chrominance block, the pixel values at locations (0,0), (0,7), (7,0), (7,7) are used for subsampling.

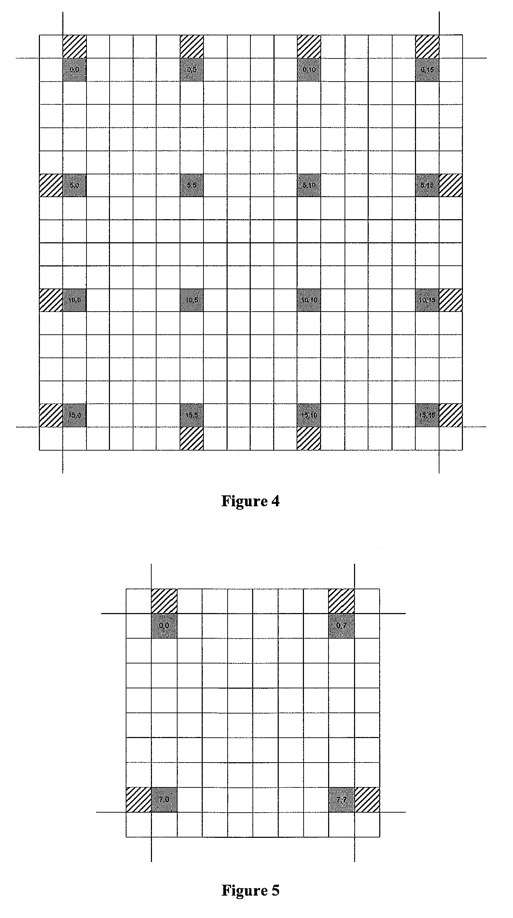

In the processing according to the present example, each macroblock in an image is subsampled into a 4x4 block (luminance) and 2x2 block (chrominance) using the modified subsampling outlined above and shown in Fig. 4.

For subsequent processing, there are available the following set of sub-modes:
1. 4x4 sub-mode, where a 4x4 subsampled block is transmitted with the subsampling lattice of (0,5), (0,10), ... (15,15) for chrominance and a 2x2 block for chrominance with the lattice (0,0), (0,7), (7,0), (7,7).
2. 2x2 sub-mode, where only a 2x2 block of samples (5,5), (5,10), (10,5), (10,10) is transmitted for luminance and no coefficients are transmitted for chrominance component. In this case, the pixel values necessary for interpolation (for reconstruction of the macroblock from the 2x2 block) are copied from the neighbouring blocks as illustrated in Figure 4 and Figure 5.

The decision on which of the two sub-modes to use depends on the modes of the previously coded blocks. If the blocks directly above and to the left are either inter-coded or intra predicted using 4x4 sub-mode (ie the blocks are available), the current block is coded using 2x2 sub-mode, otherwise it is coded using 4x4 sub-mode. The 4x4 sub-mode is also used when the current block is on the picture boundary. Note that the information about which sub-mode is to be used does not need to be sent as the decoder can recover it based on the availability of the neighbouring blocks.

The copying pattern described above uses the earliest block in the scanning order for the neighbouring pixels (see for example the bottom left corner pixel which is copied from the pixel to the left which is in a block preceding the block under consideration in the scanning order rather than the pixel directly below which is in a block which comes later than the block under consideration in the scanning order). An alternative implementation considers the availability of the neighbouring blocks to select the best predictor as follows. Taking as an example the corner pixel (0,0) and denoting its neighbours as (-1,0), (-1,-1) and (0,-1), three possibilities need to be considered:
1. all three neighbours are available. In this case their median is taken as the predictor. Alternatively the average value could be used.
2. two neighbours are available. In this case the average of the two pixels is used.
3. only one neighbour is available, in which case its pixel value is taken.

The same procedure is performed for the other corner pixels with appropriate substitution of the pixel indexes.

The blocks selected in the submodes are transformed using a suitable Hadamard transform and quantised. Additional subsequent steps such as in Han & Cha may also be performed.

In the above example, the locations of the pixels for the subsampling are selected according to the improved lattice as set out in Figs. 4 and 5, but other pixels can be used for the subsampling such as in Han and Cha.

In a more complex implementation, the following sub-modes are used, depending on the availability of the neighbouring blocks:
1. If all the surrounding blocks are available, only the four pixels in the middle would be sent (appropriately coded), at the positions (4,4), (4,12), (12,4) and (12,12) (using the Han & Cha subsampling) or (5,5), (5,10), (10,5) and (10,10) (using the proposed alternative subsampling).
2. If one block is not available, additionally send four pixels on the boundary. E.g. if block on the left is not available, send (0,0), (5,0), (10,0) and (15,0) or (3,0), (6,0), (9,0) and (12,0).
3. If two opposing blocks are not available, additionally send two sets of rows and columns. E.g., if blocks on the left and right are not available, send the same set of pixels as in point 2 above plus a corresponding set of pixels with the second coordinate replaced by 15, i.e. (0,15), (5,15), etc.
3. If two neighbouring blocks are not available, add another four (or three if one of them is the same as for the neighbouring set) pixels. E.g. if the left and top blocks are not available, send the same pixels as in case 2 above and (0,5), (0,10), (0,15) or (0,3), (0,6), (0,9) and (0,12) for the corresponding two sets.
4. If only one block is available, another row or column of pixels is added. E.g., if left, top and bottom blocks are unavailable, pixels (15,5), (15,10) and (15,15) or (15,3), (15,6), (15,9) and (15,12).
5. If none of the blocks are available, send a 4x4 subblock corresponding to the positions (0,0), (0,4), (0,8), (0,12), ..., (12,12) or (0,0), (0,5), (0,10), (0,15), (5,0), ... (15,15). Note that in this case we end up with a 4x4 block as in Han & Cha (or similar but with different sampling).

In the above, a block is "available" if it is inter-coded, or if pixels on the boundary with the current block being processed were explicitly coded.

With some modifications the distances for interpolation/prediction can be further optimised in order to ensure that the pixels are as uniformly distributed as possible, e.g. by changing the positions of the pixels in the middle that are sent in case 1, from (4,4) and (12,4) to (4,5) and (12,5).. Whether it is appropriate to do so would depend on the additional implementation complexity and efficiency of coding of the resulting set of pixels.

This approach can also be adapted depending on whether only prediction from previously processed blocks or full interpolation is in place. In the former case all non-causal blocks are simply marked as unavailable and the corresponding subsampled pixels are explicitly coded.

It could also be beneficial to combine some of these cases to reduce the number of modes and thus both encoder complexity. For example, it may not be worth using inter-block prediction when only one neighbouring block is available, especially since a 4x4 block may not need many more bits than a 4x3 one. Thus, mode 4 may be omitted and mode 5 used instead. Alternatively, a 4x4 block could be formed with denser sampling in the direction in which a neighbouring block is available. For example, if only the block on the left is available, the sampling could be changed from (0,0), (0,5), (0,10), (0,15) (5,0), (5,5), (5,10), (5,15) (10,0), (10,5), (10,10), (10,15) (15,0), (15,5), (15,10), (15,15) to (0,3), (0,7), (0,11), (0,15), (5,15), (5,3), (5,7), (5,11), (10,3), (10,7), (10,11), (10,15), (15,3), (15,7), (15,11), (15,15), assuming the modified sampling.

The 2x2 square blocks are coded using a 2x2 Hadamard transform similar to the 4x4 Hadamard transform described by Wan & Cha (and 4x4 blocks are coded in the same manner). The 1-D lines on the block boundaries are coded using a 1-D transform. Alternatively, the non-square set of pixels resulting can be expanded using symmetric extension to produce square blocks and then coded in the same way as the square blocks.

Other variations of the sampling could be employed. One possibility is to always send the same 2x2 block in the middle (i.e. values for the same pixel locations) and add lines of 4 pixels for the boundaries for which neighbouring pixels are not available.

The implementation described above uses a 16x16 block size. A similar technique can be employed for varying block sizes, with appropriate scaling of the sampling. Different subsampling ratios can also be used, e.g. mapping a 16x16 block to 8x8, etc.

The intra-coding mode (ie out of various intra-coding modes including known intra-coding modes and the modes according to the present invention) to be used may be selected on the basis of an appropriate decision mechanism. Examples of such mechanisms include:
1. Lowest MAD or MSE error as in the case of Wu & Woods framework without block restriction.
2. The same error measure but with the "block restriction" of EP 04254021.1 switched on, and the error for the intra-prediction modes takes this into consideration. Additionally, the intra-coding mode is also evaluated for the blocks for which using intra prediction is not possible due to the fact that they are surrounded by intra-predicted blocks.
3. Full cost calculation in a rate-distortion framework for all inter- and intra-coding modes similar to that described in Han & Chan. If rate-distortion optimisation is used in conjunction with non-causal prediction/interpolation directions, multiple-pass processing is required to correctly identify the availability of the blocks and maintain consistency between the encoder and the decoder. To simplify the rate-distortion optimisation, the first pass may in practice assume that none of the neighbouring blocks are available, thus allowing the cost of each block to be calculated independently, although not exactly.

An alternative approach in another embodiment is to start with the directional prediction/interpolation framework as described in e.g. EP 04254021.1 and modify the meaning of the block modes in cases when the neighbouring blocks are not available. In this embodiment, the intra block coding is based on prediction/interpolation from neighbouring blocks, rather than subsampling/reconstruction as in the previous examples.

With this approach only the lines of pixels on the boundaries are explicitly coded when the neighbouring blocks are not available. For example, when horizontal interpolation mode is in use, the following three cases are considered:
If the block on the left is not available: the left line of the current block is encoded and sent in the bitstream.
If the block on the right is not available: the right line of the current block is encoded and sent in the bitstream.
If both left and right neighbouring blocks are not available: left and right lines of the current block are encoded and sent.

When only prediction from previously decoded blocks is allowed, only the lines of pixels corresponding to the previously decoded neighbouring blocks are considered. For example, when horizontal prediction from the block on the left is used, only the left line of the current block can potentially be sent. Alternatively, the blocks corresponding to the non-causal directions can be treated as if they were not available, ie the lines on the boundaries between the current blocks can be always sent when required for interpolation.

Additional pixels in the block can be encoded and transmitted to improve the prediction/interpolation and reduce the impact of quantisation errors. For the horizontal direction example considered above, vertical lines are encoded with appropriate subsampling. Similarly for vertical and other directions, lines of pixels perpendicular to the prediction direction are encoded and transmitted. Alternatively a sampling lattice similar to the ones shown in Figure 4 and Figure 5 can be used.

Similarly as in the first embodiment, the lines of pixels can be subsampled prior to encoding.

The explicit coding of pixel lines can be used in conjunction with the interpolation/prediction modes defined in prior art (e.g. EP 04254021.1). In this case, the explicit coding of the pixel line can be signalled with a single bit flag, integrated into the VLC design or adaptively encoded depending on the current mode probabilities if an adaptive entropy coder is employed.

If a rate-distortion framework is used for mode selection it may be beneficial to include a term in the cost function that penalises the modes that use inter-block prediction/interpolation so as to reduce the error propagation at the decoder.

The invention can be implemented using a system similar to a prior art system with suitable modifications. For example, the basic components of a coding system may be as shown in Fig. 7 except that the MCTF (motion compensation temporal filtering) module is modified to execute processing as in the above-described embodiments.

In this specification, the term "frame" is used to describe an image unit, including after filtering, but the term also applies to other similar terminology such as image, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multi-spectral image, for example, IR, UV or other electromagnetic image, or an acoustic image etc.

Except where apparent from the context or as understood by the skilled person, intra-frame prediction can mean interpolation and vice versa, and prediction/interpolation means prediction or interpolation or both, so that an embodiment of the invention may involve only prediction or only interpolation, or a combination of predication and interpolation (for intra-coding), as well as motion compensation/inter-frame coding, and a block can mean a pixel or pixels from a block.

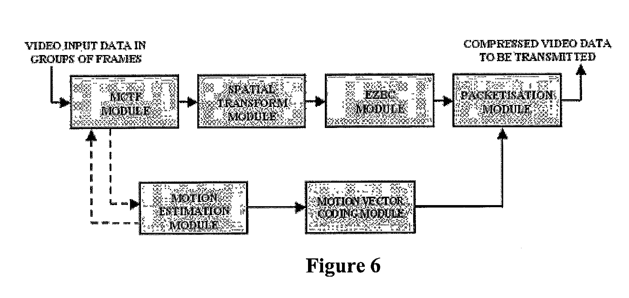

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet. A coder is shown in Fig.6 and a corresponding decoder has, for example, corresponding components for performing the inverse decoding operations.

Other types of 3-D decomposition and transforms may be used. For example, the invention could be applied in a decomposition scheme in which spatial filtering is performed first and temporal filtering afterwards.

In the previous description, the definition of "available" for a block depends on the context and the type of coding and scheme being used, as apparent to the person skilled in the art.

## Claims

1. A method of encoding a sequence of frames using 3-D decomposition, the method comprising dividing the frames into blocks and coding the blocks, wherein coding a current block comprises evaluating at least one neighbouring block in the same frame and making a determination about whether to code data in the region of the current block corresponding to a neighbouring block depending on the evaluation of said at least one neighbouring block.

2. The method of claim 1 wherein block coding or decoding comprises prediction/interpolation/copying from at least one neighbouring block, and evaluation of a neighbouring block comprises determining if it is available for prediction/interpolation/copying

3. The method of claim 2 comprising coding data of a line of the current block adjacent to a neighbouring block if said neighbouring block is not available for prediction/interpolation/copying.

4. The method of any preceding claim comprising subsampling a block and processing the subsampled block.

5. The method of claim 4 comprising subsampling a block to produce a subsampled block having at least outer boundary lines, the method comprising coding an outer boundary line if the corresponding outer boundary line of a neighbouring block is not available.

6. The method of claim 4 or claim 5 wherein a 16x16 pixel luminance block is subsampled to a 4x4 block or less, and a 8x8 chrominance block is subsampled to a 2x2 block or less.

7. The method of claim 3 further comprising subsampling said line.

8. The method of any of claims 2 to 7 wherein a neighbouring block is available if the corresponding boundary line of a neighbouring block is to be coded, or if said neighbouring block is inter-frame coded.

9. The method of any of any preceding claim wherein said block coding is based on intra frame coding using prediction/interpolation of neighbouring blocks.

10. The method of any of claims 1 to 8 wherein said block coding is based on subsampling with pixels copied from neighbouring blocks for reconstruction where necessary.

11. The method of any preceding claim wherein said coded data of the current block in the region of the neighbouring block is explicitly coded.

12. A method of encoding a block in an image having a plurality of blocks, the method comprising subsampling, for reconstruction of the block using interpolation, wherein the sampling is such that reconstruction does not require pixels from other blocks.

13. The method of claim 12 which is used in a method of intra-frame coding in 3-D decomposition coding.

14. The method of claim 12 or claim 13 wherein the subsampling involves selecting at least the pixels in the four corners of the block.

15. The method of any of claims 12 to 14 comprising subsampling a 16x16 block at locations (0,0), (0,5), (0,10), (0,15), (5,0), (5,5), (5,10), (5,15), (5,0), (10,5), (10,10), (10,15), (15,0), (15,5), (15,10), (15,15), or subsampling an 8x8 block at locations (0,0), (0,7), (7,0), (7,7).

16. The method of any of claims 12 to 15 further comprising reconstructing said block using only pixels in the block.

17. A method of decoding a sequence of frames encoded using a method of any preceding claim.

18. Use including, for example, transmission or reception of data encoded using a method of any of claims 1 to 17.

19. A coding and/or decoding apparatus for executing a method of any of claims 1 to 17.

20. A computer program, system or computer-readable storage medium for executing a method of any of claims 1 to 17.
